# EUROPEAN PATENT SPECIFICATION

(11) **EP 0 696 307 B1**
(45) Date of publication and mention of the grant of the patent: **05.11.1997**
(21) Application number: 94914240.0
(22) Date of filing: 22.04.1994
(51) Int. Cl.: C09J 133/06

(54) **ULTRAVIOLET RADIATION CURABLE ACRYLIC PRESSURE-SENSITIVE ADHESIVE COMPOSITIONS COMPRISING CARBAMATE FUNCTIONAL MONOMERS AND ADHESIVES PREPARED THEREFROM**
Durch UV-Strahlung härtbare Acrylhaftklebemassen, enthaltend carbamatfunktionelle Monomere, und daraus hergestellte Klebstoffe
COMPOSITIONS D'ADHESIFS AUTOCOLLANTS ACRYLIQUES DURCISSABLES AUX ULTRAVIOLETS COMPRENANT DES MONOMERES FONCTIONNELS CARBAMATE ET ADHESIFS PREPARES AVEC CES COMPOSITIONS

(30) Priority: 30.04.1993 US 55819
(43) Date of publication of application: 14.02.1996
(73) Proprietor: MINNESOTA MINING AND MANUFACTURING COMPANY, St. Paul, Minnesota 55133-3427 (US)
(72) Inventor: DEKETELE, Martine, H., Saint Paul, MN 55133-3427 (US); BOGAERT, Yvan, A., Saint Paul, MN 55133-3427 (US)
(74) Representative: VOSSIUS & PARTNER
(86) International application number: US9404477
(87) International publication number: WO9425537

(56) References cited:
- EP-A- 0 003 741
- EP-A- 0 357 204
- DATABASE WPI Derwent Publications Ltd., London, GB; AN 87-245986 & JP,A,62 167 378 (TOYO INK MFG KK) 23 July 1987
- DATABASE WPI Derwent Publications Ltd., London, GB; AN 87-245986 & JP,A,62 167 378

## Description

The present invention relates to an acrylic pressure-sensitive adhesive composition having improved overall performance (higher adhesion and cohesive strength) by incorporating a carbamyloxy alkyl (meth)acrylate as a comonomer in the acrylic copolymer.

Acrylate pressure-sensitive adhesives are well known in the art. In U.S. Patent No. Re 24,906 (Ulrich), alkyl acrylate copolymers are described which are predominantly alkyl esters of acrylic acid having from 4 to 14 carbon atoms and which further comprise a minor amount of a polar copolymerizable monomer such as acrylic acid. Such adhesives are widely popular as they are readily available, and provide a good balance of tack, shear, and peel properties on a variety of substrates at a relatively low cost. Methods for making these adhesives involve the use of large amounts of solvent which is an effective method for polymerization of acrylate adhesives, but one which is increasingly object to safety and environmental restrictions.

U.S. Patent No. 4,292,231 (Gabriel et al.) discloses acrylic pressure-sensitive adhesives having improved cohesive strength. The adhesive is formed by reaction of an acrylic terpolymer with a metal alkoxide or chelated metal alkoxide such as a chelated ester of orthotitanic acid. To achieve high cohesive strength of the adhesive, Gabriel et al. is limited to monomers containing both carbamate and carboxylic acid functionality in a ratio of 1/1. In column 7, lines 16-21, Gabriel et al. state that "Example 11 was included to demonstrate that applicant's invention requires a monomer containing both a carbamate group and an acid group. In this example, a monomer containing a carbamate group and an ester group was employed. The results are noticeably poor". Gabriel et al. require an alkoxide or chelating agent for crosslinking. The results of performance testing done by Gabriel et al. do not indicate improvement of adhesive strength.

The adhesive as described by Gabriel et al. is made by solution polymerization. In column 4, lines 53-58, they state that "the polymer systems of this invention may also be prepared in mass or non-aqueous dispersion type polymerization processes as are well known to those skilled in the art. However, solution polymerization processes are preferred". The use of other polymerization techniques is not exemplified.

The synthesis of acrylic monomers containing a carbamate functionality is disclosed in U.S. Patent Nos. 3,674,838 (Nordstrom), 4,126,747 (Cowherd III et al.) and 4,279,833 (Culbertson et al.). Culbertson et al. mention that the monomers of the invention can be used as precursors for polymers useful as coating materials for all types of substrates. Culbertson et I al. do not disclose the use of the acrylic monomers containing carbamate functionality for adhesive compositions. Also, Nordstrom and Cowherd III et al. mention that these monomeric carbamates can be used for a variety of polymers but do not refer to pressure-sensitive adhesives.

U.S. Patent No. 4,181,752 (Martens et al.) discloses a process for making pressure-sensitive adhesive tape which involves the ultraviolet photopolymerization of alkyl esters of acrylic acid and polar copolymerizable monomers to form the acrylate copolymer. Martens teaches that intensity and spectral distribution of the irradiation must be controlled in order to attain desirable cohesive strength and peel resistance. The photopolymerization is preferably carried out in an inert atmosphere as oxygen tends to inhibit the reaction.

Benefits of ultraviolet-radiation polymerized adhesives include safety and environmental improvements due to the elimination of solvents in the processing. A number of patents disclose the ultraviolet radiation polymerization of acrylate adhesives. U.S. Patent No. 4,364,972 (Moon) discloses the use of N-vinylpyrrolidone as the polar copolymerizable monomer in the acrylate adhesive copolymer to provide a pressure-sensitive adhesive with high adhesion to automotive paints.

Acrylic pressure-sensitive adhesives generally have a good balance of tack, peel, and shear properties. The tack property relates to the adhesive's ability to adhere quickly, the peel property relates to the adhesive's ability to resist removal by peeling, and the shear property relates to the adhesive's ability to hold in position when shear forces are exerted. Generally the tack and peel properties are directly related to each other but are inversely related to the shear property. For some demanding applications such as, for example, those applications requiring adhesion to low energy surfaces such as polyethylene and polypropylene, an increase in adhesive properties is required. The adhesive properties of an adhesive can be increased by using a tackifying resin. Typically, the addition of tackifying agents yields a 30% increase in adhesion. However, if an adhesive is modified to increase peel/tack its resistance to shear is lowered (see, for example, U.S. Patent No. 4,077,926 (Sanderson et al.)). Furthermore, the addition of tackifiers to ultraviolet-radiation cured adhesives results in processing difficulties.

For example, the above-cited Moon patent, which concerns pressure-sensitive adhesives designed specifically to provide enhanced adhesion to automotive paints, teaches that tackifiers can be blended into the photoactive mixtures of monomers from which those pressure-sensitive adhesives are photopolymerized, but warns, at column 6, lines 8-12, that "the addition of any such material adds complexity and hence expense to an otherwise simple, straight forward, economical process, and is not preferred, except to achieve specific results". The Moon patent does not exemplify this teaching. However, the introduction of a tackifier into a photopolymerizable mixture of monomers often interferes with the photopolymerization and prevents the attainment of the desired adhesive and cohesive properties.

U.S. Patent No. 4,988,742 (Moon et al.) discloses acrylic terpolymer pressure-sensitive adhesives comprising photopolymerized polymers containing an alkyl acrylate monomer, a first (strongly) polar copolymerizable monomer, a second (strongly or moderately) polar monomer, and a hydrogenated rosin ester tackifying agent. The glass transition temperature of the adhesive as measured by dynamic mechanical thermal analysis (DMTA) is lower than for an identical acrylic terpolymer omitting the tackifying agent.

U.S. Patent No. 5,028,484 (Martin et al.) discloses a pressure-sensitive adhesive comprising ultraviolet polymerized acrylic polymer and tackifying resins. The tackifying resins are aromatic polymeric resins which have an average molecular weight of 300 to 2,500, a polydispersity index of less than 5, a glass transition temperature of 40° to 120°C and a solubility parameter of 7 to 9.5 (cal/cc)-½ The adhesive has a monomer conversion factor of at least 98%. Martin et al. further discloses that the tackified pressure-sensitive adhesive of the invention has good storage stability, i.e., said pressure-sensitive adhesive loses no more than 30% (the claims and abstract refer to about 70%; the specification about 30%) of its adhesion when aged for a period of two weeks at 70°C.

A need thus exists for an acrylic pressure-sensitive adhesive having improved peel and tack properties as can be obtained with tackifying resins, but which also has high shear properties. A need further exists for a high performance adhesive without the processing difficulties inherent to tackified adhesives when cured with ultraviolet light. A need further exists for a high performance adhesive with good storage stability, e.g., the adhesive has the same adhesion level after aging.

Applicants have found such an adhesive. Applicants have now discovered that the use of from 5 to 45 parts of a carbamyloxyalkyl (meth)acrylate as a comonomer in an acrylic adhesive formulation results upon cure in a pressure-sensitive adhesive having increased adhesion, comparable to a conventional tackified acrylic pressure-sensitive adhesive, and at the same time demonstrating an increase in cohesive strength. The pressure-sensitive adhesive of the invention also displays good storage stability.

The present invention provides a pressure-sensitive adhesive having high adhesion properties and at the same time high cohesive strength, comprising an ultraviolet radiation polymerized copolymer comprising:
(a) 50 to 94 parts by weight of an acrylic acid ester of a nontertiary noncyclic (i.e., linear and/or branched) alkyl alcohol comprising 4 to 14 carbon atoms;
(b) 5 to 45 parts by weight of a carbamyloxyalkyl (meth)acrylate;
(c) optionally 1 to 15 parts by weight of a strongly polar monomer copolymerizable with the monomers of elements (a) and (b) and (d); and
(d) optionally 1 to 35 parts by weight of a moderately polar monomer copolymerizable with the monomers of elements (a) and (b) and (c);
wherein (a), (b), (c), and (d) comprise 100 parts by weight total; and wherein the copolymer must comprise the polar monomer of element (c), or element (d), or both elements (c) and (d).

The invention also relates to pressure-sensitive adhesive compositions from which the pressure-sensitive adhesive of the invention is formed. The pressure-sensitive adhesive composition comprises:
(a) 50 to 94 parts by weight of an acrylic acid ester of a nontertiary noncyclic alkyl alcohol comprising 4 to 14 carbon atoms;
(b) 5 to 45 parts by weight of a carbamyloxyalkyl (meth)acrylate;
(c) optionally 1 to 15 parts by weight of a strongly polar monomer copolymerizable with the monomers of elements (a) and (b) and (d);
(d) optionally 1 to 35 parts by weight of a moderately polar monomer copolymerizable with the monomers of elements (a) and (b) and (c);
   wherein (a) plus (b) plus (c) plus (d) comprise 100 parts by weight total;
   and wherein said composition must comprise polar monomer of element (c), or element (d), or both elements (c) and (d); and
(e) 0.01 to 1 weight percent of a photoinitiator based upon the total weight of (a) plus (b) plus (c) plus (d).

The pressure-sensitive adhesive composition preferably possesses a viscosity of 500 mPa·s (cps) to 10,000 mPa·s (cps). The pressure-sensitive adhesive composition typically would possess a viscosity of 500 mPa·s (cps) to 10,000 mPa·s (cps) by virtue of one or both of the following: (i) prepolymerization of one or more of the monomers of elements (a), (b), (c) and (d); or (ii) the addition of a thickening agent to said pressure-sensitive adhesive composition.

The invention also relates to substrates coated with the pressure-sensitive adhesive of the invention.

In most cases, the pressure-sensitive adhesive of the invention will be in the form of a thin layer carried by a substrate to which it may be either permanently or temporarily adhered. Where the pressure-sensitive adhesive is permanently adhered, the resultant product is a normally tacky pressure-sensitive adhesive tape. Where the substrate is provided with a release coating, on which the pressure-sensitive adhesive is coated, the pressure-sensitive adhesive is temporarily adhered in the form of a so-called transfer tape.

### Acrylic Copolymer Pressure-Sensitive Adhesive

The acrylic copolymer pressure-sensitive adhesives of the present invention comprise an alkyl acrylate monomer, an acrylic monomer comprising carbamate functionality, and at least one polar copolymerizable monomer.

### Alkyl Acrylate Monomer

Useful alkyl acrylate monomers are the monofunctional unsaturated acrylate esters of non-tertiary noncyclic alkyl alcohols, the non-tertiary alcohols of which comprise from 4 to 14 carbon atoms. Such non-polar monomers include, but are not limited to those selected from the group consisting of isooctyl acrylate, 2-ethyl hexyl acrylate, isononyl acrylate, decyl acrylate, dodecyl acrylate, butyl acrylate, hexyl acrylate, and mixtures thereof. Preferred non-polar alkyl acrylate monomers include those selected from the group consisting of isooctyl acrylate, butyl acrylate, 2-ethylhexyl acrylate, and mixtures thereof.

The acrylic copolymer of the invention comprises from 50 to 94 parts by weight of the alkyl acrylate monomer, more preferably from 55 to 70 parts by weight, based upon 100 parts by weight total monomer in the copolymer.

### Carbamyloxyalkyl (Meth)acrylate

The polymerizable composition further comprises an acrylic monomer containing carbamate functionality, which is copolymerizable with the alkyl acrylate monomer and polar monomer. Useful monomers contain one carbamate functional group. The synthesis of acrylic monomers having carbamate functionality is disclosed in U.S. Patent Nos. 3,674,838 (Nordstrom), 4,126,747 (Cowherd III et al.) and 4,279,833 (Culbertson et al.).

The carbamyloxyalkyl (meth)acrylate monomers useful in the present invention are illustrated by the following formula: 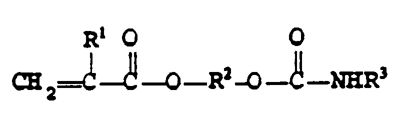 wherein R¹ is selected from the group consisting of -H and CH₃, R² is a divalent hydrocarbon radical comprising 1 to 12 carbon atoms, and R³ is selected from the group consisting of lower alkyl radicals comprising 1 to 8 carbon atoms and hydrogen. Divalent hydrocarbon radicals include but are not limited to those selected from the group consisting of divalent alkylene radicals including but not limited to those selected from the group consisting of methylene, ethylene, propylene, isopropylene, butylene, isobutylene, dodecamethylene, among others.

Examples of useful carbamyloxyalkyl (meth)acrylate monomers include but are not limited to those selected from the group consisting of N-methylcarbamyloxymethyl (meth)acrylate, N-ethylcarbamyloxymethyl (meth)acrylate, N-methyl-2-carbamyloxyethyl (meth)acrylate, N-ethyl-2-carbamyloxyethyl (meth)acrylate, N-t-butyl-2-carbamyloxyethyl (meth)acrylate, N-ethyl-4-carbamyloxybutyl (meth)acrylate, N-methyl-4-carbamyloxybutyl (meth)acrylate, and mixtures thereof.

The acrylic copolymer of the invention comprises 5 to 45 parts by weight, preferably from 10 parts to 35 parts by weight, e.g 10 parts to 25 parts, for performance and cost reasons, of acrylic monomer containing carbamate functionality based upon 100 parts by weight total monomer contained in the ultraviolet radiation polymerized copolymer.

### Polar Monomer

The polar monomer which is copolymerizable with the alkyl acrylate monomer and the carbamyloxyalkyl (meth)acrylate monomer can be selected from the group consisting of strongly polar copolymerizable monomers including but not limited to those selected from the group consisting of acrylic acid, itaconic acid, hydroxyalkyl acrylates, acrylamides, substituted acrylamides and mixtures thereof, and/or from moderately polar copolymerizable monomers including but not limited to those selected from the group consisting of N-vinyl pyrrolidone, N-vinyl caprolactam, acrylonitrile, N,N-dimethylacrylamide and mixtures thereof.

The copolymer of the invention comprises 1 to 15 parts by weight, preferably 5 to 10 parts by weight for performance reasons, strongly polar copolymerizable monomer based upon 100 parts by weight total monomer contained in the ultraviolet radiation polymerized copolymer and/or the copolymer of the invention comprises 1 to 35 parts by weight, preferably 15 to 30 parts by weight for performance reasons, moderately polar copolymerizable monomer based upon 100 parts by weight total monomer contained in the ultraviolet radiation polymerized copolymer.

### Photoinitiator

The adhesive composition of the invention comprises a photoinitiator to induce polymerization of the monomers. Photoinitiators which are useful include but are not limited to those selected from the group consisting of the benzoin ethers such as benzoin methyl ether and benzoin isopropylether, substituted benzoin ethers such as anisole methyl ether, substituted acetophenones such as 2,2-dimethoxy-2-phenyl acetophenone, substituted alpha-ketols such as 2-methyl-2-hydroxy propiophenone, aromatic sulfonyl chlorides such as 2-naphtalene sulfonyl chloride, and photoactive oximes such as 1-phenyl-1,1-propanedione-2-ethoxycarbonyl-oxime, and mixtures thereof. The photoinitiator is typically present in an amount of 0.01 percent to 1 percent by weight based on the total weight of the monomer in the adhesive of the invention (polar monomer, alkyl acrylate monomer, plus carbamate functional monomer).

### Crosslinking Agent

The adhesive composition of the invention may optionally further comprise a crosslinking agent. Preferred crosslinking agents for acrylic pressure-sensitive adhesives are multiacrylates such as 1,6-hexanediol diacrylate as well as those disclosed in U.S. Patent No. 4,379,201 (Heilman et al.). Other types of crosslinking agents are also useful, e.g., any of the triazine crosslinking agents taught in U.S. Patent Nos. 4,330,590 (Vesley) and 4,329,384 (Vesley et al.). The crosslinking agent is typically used in the range of from 0.01 to 1 percent by weight based on the total weight of monomer in the adhesive of the invention (polar monomer, alkyl acrylate monomer, plus carbamate functional monomer).

### Backing/Core Layer

The adhesive of the invention may be coated on at least one side of a substrate such as a backing to form an adhesive tape. The adhesive may be adhered to a variety of substrates. A laminated foam tape may be prepared by coating the adhesive of the invention on one side of a core layer. The opposite side of the core layer is bonded to a backing layer, optionally with adhesive which may be the adhesive of the invention to form a laminated foam tape.
Alternatively, the adhesive of the invention can be coated on a release liner to form an adhesive transfer tape. The release liner typically comprises a backing coated with a release material such as those well known in the art (i.e. silicone).

As indicated above the tapes of the invention can have a backing and/or core layer. U.S. Patent No. 5,079,067, describes useful backing and core layers. The core layer may consist of such materials as acrylates, polyethylenes, polypropylenes, neoprenes, polyolefins, polyurethanes, silicones, etc. The core layer may be a foam-like layer, e.g., a monomer blend comprising microspheres may be used. The microspheres may be glass or polymeric. The microspheres should have an average diameter of 10 to 200 micrometers, and comprise from 5 to 65 volume percent of the core layer. The thickness of the foam-like layers in preferred tapes of the invention range from 0.3 mm to 4.0 mm in thickness. Preferred glass microspheres have average diameters of about 80 micrometers. When glass microspheres are used, the polymeric matrix should be at least 3 times as thick as their diameter, preferably at least 7 times. The thickness of the layers containing such glass microspheres should be at least six times, preferably at least twenty times that of each microsphere-free layer.

The backing may comprise a variety of materials including but not limited to those selected from the group consisting of cellulose acetate, polyvinylchloride, paper, polyethylene, polypropylene, and polyester.

Other useful materials which can be blended into the pressure-sensitive adhesive layer or the core layer include, but are not limited to those selected from the group consisting of fillers, pigments, fibers, woven and nonwoven fabrics, antioxidants, stabilizers, fire retardants, and viscosity adjusting agents. An especially useful filler material is hydrophobic silica as disclosed in U.S. Patent Nos. 4,710,536 and 4,749,590 (Klingen et al.). In one preferred embodiment of the present invention, the pressure-sensitive adhesive layer further comprises from about 2 to about 15 parts by weight of a hydrophobic silica having a surface area of at least 10 m²/g per 100 parts by weight of the pressure-sensitive adhesive copolymer.

### Method of Polymerization

The pressure-sensitive adhesive composition of the present invention can be prepared by premixing together the photopolymerizable non-polar alkyl acrylate monomer(s) and polar monomer(s) and a photoinitiator or thermal initiator. Examples of useful photoinitiators have been discussed previously. Examples of useful thermal initiators include but are not limited to those selected from the group consisting of azo compounds such as 2,2-azobisisobutyronitrile, dimethyl 2,2'-azobis-isobutyrate, azobis-(diphenyl methane), 4,4-azobis-(4-cyanopentanoic acid); peroxides such as benzoyl peroxide, cumyl peroxide, tert-butyl peroxide, cyclohexanone peroxide, glutaric acid peroxide, lauroyl peroxide; hydrogen peroxide, hydroperoxides such as tert-butyl hydroperoxide and cumene hydroperoxide; peracids such as peracetic acid and perbenzoic acid; potassium persulfate; and peresters such as diisopropyl percarbonate. This premix is then partially polymerized to an absolute viscosity in the range of from 500 mPa·s (cps) to 10,000 mPa·s (cps) to achieve a coatable syrup comprising prepolymer and unpolymerized monomers. The acrylic carbamate is then dissolved in this syrup. Alternatively, the acrylic carbamate monomer can be included in the premix along with the alkyl acrylate and polar monomer from which the syrup is made. Alternatively, all the monomers (alkyl acrylate, acrylic carbamate, and polar) may be mixed with a sufficient amount of thixotropic agent such as fumed hydrophilic silica to achieve a syrup of coatable thickness (500 to 10,000 mPa·s (cps)) without a prepolymerization reaction. Photoinitiator is added to both types of syrup prior to polymerization to the copolymer of the invention. Optional photocrosslinking agent and other useful materials as mentioned above may also be dissolved into either of these syrups.

This syrup (i.e., adhesive composition of the invention) is coated onto a flexible carrier web and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in air as described in U.S. Patent No. 4,181,752 (Martens et al.). If, instead of covering the polymerizable coating, the photopolymerization is to be carried out in an inert atmosphere, the permissible oxygen content of the inert atmosphere can be increased by mixing into the polymerizable monomer an oxidizable tin compound as taught in U.S. Patent No. 4,303,485 (Levens), which also teaches that such procedures will allow thick coatings to be polymerized in air.

Where multilayer tape constructions are desirable, a preferred method of construction is multilayer coating, as described in U.S. Patent No. 4,818,610 (Zimmerman et al.), wherein a plurality of copolymerizable coatable compositions is prepared, each composition containing at least one photopolymerizable monomer, one of the coatable compositions being the novel pressure-sensitive adhesive of the invention. The coatable compositions are coated to provide a plurality of superimposed layers with contiguous layers defining an interface there between, with the novel pressure-sensitive adhesive copolymer of the invention being coated as a first or last layer. Migration of photopolymerizable monomers through the interface between contiguous layers is permitted, and the superimposed layers are then simultaneously irradiated. This provides polymeric chains comprised of copolymers of photopolymerizable monomers originating from contiguous layers extending through the interface there between, thereby producing a tape having layers which cannot be delaminated.

### Test Methods

In the examples that will appear below, certain test procedures were used to evaluate the performance of a given pressure-sensitive adhesive of the invention made with the adhesive composition of the present invention.

### 180° Peel Adhesion

This test follows the guidelines of American Society of Testing Materials (ASTM) D3330-87: "Peel adhesion of pressure-sensitive tape at 180° angle". For this test, a stainless steel (SS) panel and a glass panel were used. The SS and glass panels were washed with methylethylketone and cleaned with an absorbing material, such as paper. Each panel was dried and washed three more times with heptane.

A tape test specimen, 1.27 cm wide and about 15.2 cm long was secured by one of its ends to the test panel. The other end of the tape was held up to keep the sample loosely positioned over the test panel. The tape was mechanically rolled down with one pass of a 2 kg roller at 30.5 cm/min. The free end of the tape was clamped into the jaw of a peel tester and the tape was pulled back at 180° at a rate of 30.5 cm/min. The tester records the average peel force in N/dm.

### Static Shear

This test follows the procedure described in ASTM D3654M-88: "Holding power of pressure-sensitive tape" with some deviations as outlined below. A stainless steel panel was used as a substrate and it was cleaned using the procedure described above for the "180° Peel Adhesion" test. A 1.27 cm wide sample was cut from the tape and applied to the test panel without pressure. The sample was rolled down onto the test panel with three passes (each direction) of a 2 kg roller. The sample was cut to obtain a 1.27 cm x 1.27 cm overlap on the panel. The panel was placed in a vertical position (maximum 2° tilt backwards) and a 1 kg weight (test at room temperature) was attached to the free end of the tape. The time at which the mass falls is the failure value. All static shear data were recorded in minutes. The test was discontinued if the tape had not failed after 10,000 minutes (recorded as 10,000+).

### Abbreviations

The following abbreviations are used herein:
- HDDA: hexane diol diacrylate
- AA: acrylic acid
- IOA: isooctyl acrylate
- NVP: n-vinyl pyrrolidone
- Ex.: example
- sp: split
- RT: room temperature

### Examples

The following examples are intended to be illustrative and should not be construed as limiting the invention in any way. All parts, ratios, percentages, etc., in the examples and the rest of the specification, are by weight unless otherwise noted.

### Examples 1-4 and Comparative Example C-1

A mixture of IOA/AA 93.5/6.5 was partially thermally polymerized by using 0.016 part by weight of benzoylperoxide as an initiator based upon 100 parts by weight of IOA plus AA. The partial polymerization was accomplished in an inert atmosphere (nitrogen) to provide a coatable syrup having an absolute viscosity of 500-10,000 mPa·s (cps). Different amounts of N-butyl-2-carbamyloxyethyl acrylate (available as Acticryl® CL1039 from SNPE, France) as indicated in Table 1 were added to the syrup for Examples 1-4. Comparative Example C-1 was made without the addition of Acticryl® CL1039 (also referred to herein as "CL1039"). To all prepolymerized syrups were added 0.3 part by weight of 2,2-dimethoxy-2-phenyl-acetophenone (Irgacure™ 651 available from Ciba Geigy) as a photoinitiator based upon 100 parts of monomer containing syrup. The mixtures were knife coated onto a 0.04 mm biaxially oriented polyethylene terephthalate (PET) film, and covered by a silicone-coated, 0.1 mm PET film, at a knife setting which was adjusted to squeeze the syrup to provide a uniform coating of about 0. 13 mm thick. The resulting composite was exposed to a bank of ultraviolet lamps which provided ultraviolet radiation at a total energy of about 450 mJ/cm². 180° peel adhesion and static shear were measured for these samples and the test results are listed in Table 1.

**TABLE 1**

| IOA/AA/ACTICRYL® CL1039 ADHESIVE TAPES | | | | |
|---|---|---|---|---|
| Ex. | Monomer Ratio IOA/AA/CL1039 | 180° Peel Adhesion (N/dm) | | RT Shear* (min) (1.27 cm x 1.27 cm, 1kg) |
| | | Glass | SS | |
| 1 | 84.1/5.9/10 | 69 | 78 | 79 |
| 2 | 79.5/5.5/15 | 60 | 76 | 476 |
| 3 | 74.8/5.2/20 | 73 | 76 | 746 |
| 4 | 70/5/25 | 62 | 76 | 923 |
| C-1 | 93.5/6.5/0 | 76 | 82 | 16 |

| | | | | |
|---|---|---|---|---|
| *All static shear failures are cohesive | | | | |

From Table 1 it is clear that the use of a carbamate containing monomer such as Acticryl® CL1039 in the adhesive formulation causes an increase in cohesive strength. Although the relative amount of strongly polar comonomer (AA), which contributes to the cohesive strength and adhesion to polar substrates, is decreased in Examples 1-4 by the addition of the Acticryl® CL1039, the adhesive strength to polar substrates such as glass or SS is surprisingly only slightly decreased.

### Examples 5-6 and Comparative Example C-2

The procedure of Examples 1-2 and Comparative Example C-1 was repeated, respectively, but additionally 0.15 part by weight 2,4-bistrichloromethyl-6-(4-methoxyphenyl)-s-triazine crosslinking agent was added based upon 100 parts by weight of the monomer containing syrup to further increase the cohesive strength of the adhesive. The monomer ratio, peel adhesion, and static shear results are given in Table 2.

**TABLE 2**

| IOA/AA/ACTICRYL® CL1039 ADHESIVE TAPES CONTAINING 0.15 PART XL-353 | | | | |
|---|---|---|---|---|
| Ex. | Monomer Ratio IOA/AA/CL1039 | 180° Peel Adhesion (N/dm) | | RT Shear (min) (1.27 cm x 1.27 cm, 1kg) |
| | | Glass | SS | |
| 5 | 84.1/5.9/10 | 58 | 60 | 10,000+ |
| 6 | 79.5/5.5/15 | 56 | 64 | 10,000+ |
| C-2 | 93.5/6.5/0 | 58 | 58 | 1064sp |

Again an increase in cohesive strength is observed for Examples 5-6 containing acrylic carbamate monomer and no decrease in adhesive strength is seen as could have been expected due to the relative lower amount of strongly polar monomer AA.

### Examples 7-14 and Comparative Example C-1

In the examples outlined above, the addition of different amounts of the carbamate Acticryl® CL1039 to the prepolymer mixture IOA/AA 93.5/6.5 affected the total amount of strongly polar copolymerizable monomer (acrylic acid) present in the polymer. To eliminate this variable, in Examples 7-14 the amount of AA was left constant and a portion of the IOA was replaced by the carbamate Acticryl® CL1039. Therefore, a mixture of IOA/AA 93.5/6.5 was partially thermally polymerized as described in Examples 1-4. To this mixture, both AA and carbamate Acticryl® CL1039 were added to obtain the desired ratio (constant AA level) as given in Table 3. 0.3 part by weight of Irgacure™ 651 initiator based upon 100 parts monomer containing syrup was added to the monomer containing syrup. No crosslinker was added to these syrups. The syrups were knife coated and cured as described in Examples 1-4. Comparative Example C-1 was made without carbamate monomer addition. The monomer ratios, peel adhesion, and static shear test results are given in Table 3.

**TABLE 3**

| ADHESIVE PROPERTIES OF IOA/AA/CL1039 COMPOSITIONS | | | | |
|---|---|---|---|---|
| Ex. | Monomer Ratio IOA/AA/CL1039 | 180° Peel Adhesion (N/dm) | | RT Shear (min) (1.27 cm x 1.27 cm, 1kg) |
| | | Glass | SS | |
| 7 | 88.5/6.5/5 | 71 | 60 | 54sp |
| 8 | 83.5/6.5/10 | 73 | 82 | 368sp |
| 9 | 78.5/6.5/15 | 80 | 67 | 614sp |
| 10 | 73.5/6.5/20 | 91 | 67 | 914sp |
| 11 | 68.5/6.5/25 | 92 | 71 | 693sp |
| 12 | 63.5/6.5/30 | 107 | 71 | 1101sp |
| 13 | 58.5/6.5/35 | 104 | 82 | 1432sp |
| 14 | 53.5/6.5/40 | 102 | 73 | 1729sp |
| C-1 | 93.5/6.5/0 | 76 | 82 | 16sp |

An increase in both adhesion to glass and cohesive strength was observed when the isooctylacrylate was gradually replaced by Acticryl® CL1039. Even small amounts of acrylic carbamate increased the cohesive strength substantially. The adhesion to stainless steel varied slightly.

### Examples 15-18 and Comparative C-3

Examples 15-17 were made from monomer mixtures containing IOA, AA and Acticryl® CL1039 in the ratios as given in Table 4. To each monomer mixture was added 0.15 part by weight Irgacure™ 651 initiator based upon the total weight of monomer. The samples were degassed and prepolymerized under UV light to obtain a syrup with a coatable viscosity. Example 18 was made by UV prepolymerizing a mixture of IOA/AA 93.5/6.5 using 0.15 part by weight Irgacure™ 651 initiator. To this mixture were added amounts of AA and CL1039 to obtain a ratio of IOA/AA/CL1039 73.5/6.5/20. Comparative Example C-3 was made by UV prepolymerizing a mixture of IOA/AA 93.5/6.5 (using 0.15 part by weight Irgacure™ 651).

To each prepolymerized syrup was added an additional 0.15 part of Irgacure™ 651 initiator based on the total weight of the monomer. Each syrup was separately coated between a primed and a siliconised polyester liner and cured under UV light (450mJ/cm²). The coating thickness was 0.127 mm (5 mils). Each tape was left at RT overnight after which it was tested for peel adhesion and shear. The tapes were tested again for their peel adhesion after aging at RT for 4 weeks. The results are given in Table 4.

**TABLE 4**

| ADHESIVE PROPERTIES OF IOA/AA/CL1039 COMPOSITIONS PREPOLYMERIZED BY UV RADIATION | | | | |
|---|---|---|---|---|
| Ex. | Monomer Ratio IOA/AA/CL1039 | 180° Peel Adhesion Glass (N/dm) | | RT Shear (min) (1.27 cm x 1.27 cm, 1kg) |
| | | Initial | Aged | |
| 15 | 88.5/6.5/5 | 69 | 73 | 51sp |
| 16 | 73.5/6.5/20 | 87 | 89 | 428sp |
| 17 | 53.5/6.5/40 | 111 | 111 | 2576sp |
| 18 | 73.5/6.5/20 | 89 | 93 | 496sp |
| C-3 | 93.5/6.5/0 | 73 | 71 | 52sp |

The results of this test indicate that high performance adhesives are made using the Acticryl® CL1039 comonomer independent of the way the prepolymerized syrup is made. The prepolymer syrups can be made either thermally or by using UV light; the Acticryl® CL1039 can be added to a prepolymerized IOA/AA syrup or to the monomer mixture before prepolymerization.

This experiment also shows that the tapes have the same performance after aging (thus do not behave like tackified adhesives which typically lose adhesion with aging). All static shear failures are cohesive.

### Examples 19-22 and Comparative Example C-4

The same type of experiments as outlined above in Examples 7-14 was repeated with adhesive compositions containing 9% by weight of acrylic acid. In this case the examples were made starting from IOA/AA (91/9) prepolymerized syrup to which AA and Acticryl® CL1039 were added in an amount to obtain the desired ratio as is given in Table 5 below. The samples were further prepared as described in Examples 7-14. Comparative Example C-4 was prepared in the same way as Comparative Example C-1 but starting from IOA/AA (91/9). The peel adhesion and static shear test results are given in Table 5.

**TABLE 5**

| ADHESIVE PROPERTIES OF IOA/AA/CL1039 COMPOSITIONS | | | | |
|---|---|---|---|---|
| Ex. | Monomer Ratio IOA/AA/CL1039 | 180° Peel Adhesion (N/dm) | | RT Shear (min) (1.27 cm x 1.27 cm, 1kg) |
| | | Glass | SS | |
| 19 | 81/9/10 | 84 | 69 | 817sp |
| 20 | 71/9/20 | 98 | 76 | 1297sp |
| 21 | 61/9/30 | 104 | 87 | 1663sp |
| 22 | 51/9/40 | 107 | 91 | 1658sp |
| C-4 | 91/9/0 | 82 | 87 | 1065sp |

In this case, higher amounts (e.g., greater than about 10 parts) of Acticryl® CL1039 are desirable to obtain an adhesive with higher overall performance.

### Example 23 and Comparative Example C-5

A mixture of IOA/NVP 71/29 was partially thermally polymerized by using 0.016 part by weight of benzoylperoxide as an initiator based upon 100 parts by weight of IOA plus NVP. The partial polymerization was accomplished in an inert atmosphere (nitrogen) to provide a coatable syrup having a viscosity of 500-10,000 mPa·s (cps). 10 parts of Acticryl® CL1039 were added to the syrup, based upon 90 parts of syrup. To this sample 0.3 part of Irgacure™ 651 based upon 100 parts by weight of the Acticryl® containing syrup and 0.15 part of HDDA based upon 100 parts by weight of the Acticryl® CL1039 containing syrup were added. The syrup was knife coated and cured as described in Examples 1-4. Comparative Example C-5 was made as Example 23, without the addition of the Acticryl® CL1039. The peel adhesion and static shear tests results are summarized in Table 6.

**TABLE 6**

| IOA/NVP/ACTICRYL® CL1039 ADHESIVE TAPES | | | | |
|---|---|---|---|---|
| Ex. | Monomer Ratio IOA/NVP/CL1039 | 180° Peel Adhesion (N/dm) | | RT Shear (min) (1.27 cm x 1.27 cm, 1kg) |
| | | Glass | SS | |
| 23 | 64/26/10 | 96 | 102 | 10,000+ |
| C-5 | 71/29/0 | 62 | 78 | 10,000+ |

Addition of the Acticryl® CL1039 carbamate to the syrup containing moderately polar NVP comonomer results in improved adhesion without sacrifice of cohesive strength.

## Claims

1. A pressure-sensitive adhesive comprising an ultraviolet radiation polymerized copolymer comprising:
(a) 50 to 94 parts by weight of an acrylic acid ester of a nontertiary noncyclic alkyl alcohol comprising 4 to 14 carbon atoms;
(b) 5 to 45 parts by weight of a carbamyloxyalkyl (meth)acrylate;
(c) optionally 1 to 15 parts by weight of a strongly polar monomer copolymerizable with the monomers of elements (a) and (b) and (d); and
(d) optionally 1 to 35 parts by weight of a moderately polar monomer copolymerizable with the monomers of elements (a) and (b) and(c);
wherein (a) plus (b) plus (c) plus (d) comprise 100 parts by weight total; and wherein said copolymer must comprise polar monomer of element (c), or element (d), or both elements (c) and (d).

2. The pressure-sensitive adhesive of claim 1 which comprises 10 to 35 parts by weight of said carbamyloxyalkyl (meth)acrylate.

3. The pressure-sensitive adhesive of claim 1 wherein said carbamyloxyalkyl (meth)acrylate is N-butyl-2-carbamyloxyethyl acrylate.

4. The pressure-sensitive adhesive of claim 1, wherein said strongly polar monomer is selected from the group consisting of acrylic acid, itaconic acid, hydroxyalkyl acrylates, acrylamides, substituted acrylamides, and mixtures thereof.

5. The pressure-sensitive adhesive of claim 1 wherein said moderately polar monomer is selected from the group consisting of N-vinyl pyrrolidone, N-vinyl caprolactam, acrylonitrile, N,N-dimethylacrylamide, and mixtures thereof.

6. The pressure-sensitive adhesive of claim 1 which further comprises a crosslinking agent, wherein said crosslinking agent is present in an amount of 0.01 to 1 weight percent based upon the total weight of (a) plus (b) plus (c) plus (d).

7. The pressure-sensitive adhesive of claim 1 wherein said alkyl acrylate monomer is selected from the group consisting of isooctyl acrylate, 2-ethyl hexyl acrylate, isononyl acrylate, decyl acrylate, dodecyl acrylate, butyl acrylate, hexyl acrylate, and mixtures thereof.

8. The pressure-sensitive adhesive of claim 1 wherein said adhesive further comprises microspheres, wherein said microspheres comprise 5 to 65 volume percent of the adhesive, wherein said microspheres have an average diameter of 10 to 200 micrometers.

9. A pressure-sensitive adhesive tape comprising a backing having the pressure-sensitive adhesive of claim 1 adhered to at least one surface thereof.

10. A pressure-sensitive adhesive composition comprising:
(a) 50 to 94 parts by weight of an acrylic acid ester of a nontertiary noncyclic alkyl alcohol comprising 4 to 14 carbon atoms;
(b) 5 to 45 parts by weight of a carbamyloxyalkyl (meth)acrylate;
(c) optionally 1 to 15 parts by weight of a strongly polar monomer copolymerizable with the monomers of elements (a) and (b) and (d);
(d) optionally 1 to 35 parts by weight of a moderately polar monomer copolymerizable with the monomers of elements (a) and (b) and (c);
wherein (a) plus (b) plus (c) plus (d) comprise 100 parts by weight total; and wherein said composition must comprise polar monomer of element (c) or element (d), or both elements (c) and (d);
(e) 0.01 to 1 weight percent of a photoinitiator based upon the total weight of (a) plus (b) plus (c) plus (d).

## Patentansprüche

1. Haftkleber, umfassend ein durch UV-Strahlung polymerisiertes Copolymer, umfassend:
(a) 50 bis 94 Gewichtsteile eines Acrylsäureesters eines nichttertiären nichtcyclischen Alkylalkohols, umfassend 4 bis 14 Kohlenstoffatome;
(b) 5 bis 45 Gewichtsteile eines Carbamoyloxyalkyl(meth)acrylats;
(c) gegebenenfalls 1 bis 15 Gewichtsteile eines stark polaren Monomers, copolymerisierbar mit den Monomeren der Elemente (a) und (b) und (d); und
(d) gegebenenfalls 1 bis 35 Gewichtsteile eines mäßig polaren Monomers, copolymerisierbar mit den Monomeren der Elemente (a) und (b) und (c);
wobei (a) plus (b) plus (c) plus (d) insgesamt 100 Gewichtsteile umfassen; und wobei das Copolymer ein polares Monomer des Elements (c) oder des Elements (d) oder sowohl der Elemente (c) als auch (d) umfassen muß.

2. Haftkleber gemäß Anspruch 1, der 10 bis 35 Gewichtsteile des Carbamoyloxyalkyl(meth)acrylats umfaßt.

3. Haftkleber gemäß Anspruch 1, wobei das Carbamoyloxyalkyl(meth)acrylat N-Butyl-2-carbamoyloxyethylacrylat ist.

4. Haftkleber gemäß Anspruch 1, wobei das stark polare Monomer aus der Gruppe ausgewählt wird, die aus Acrylsäure, Itaconsäure, Hydroxyalkylacrylaten, Acrylamiden, substituierten Acrylamiden und Gemischen davon besteht.

5. Haftkleber gemäß Anspruch 1, wobei das mäßig polare Monomer aus der Gruppe ausgewählt wird, die aus N-Vinylpyrrolidon, N-Vinylcaprolactam, Acrylnitril, N,N-Dimethylacrylamid und Gemischen davon besteht.

6. Haftkleber gemäß Anspruch 1, der weiterhin ein Vernetzungsmittel umfaßt, wobei das Vernetzungsmittel in einer Menge von 0,01 bis 1 Gewichtsprozent, bezogen auf das Gesamtgewicht von (a) plus (b) plus (c) plus (d), vorliegt.

7. Haftkleber gemäß Anspruch 1, wobei das Alkylacrylatmonomer aus der Gruppe ausgewählt wird, die aus Isooctylacrylat, 2-Ethylhexylacrylat, Isononylacrylat, Decylacrylat, Dodecylacrylat, Butylacrylat, Hexylacrylat und Gemischen davon besteht.

8. Haftkleber gemäß Anspruch 1, wobei der Klebstoff weiterhin Mikrokugeln umfaßt, wobei die Mikrokugeln 5 bis 65 Volumenprozent des Klebstoffs umfassen, wobei die Mikrokugeln einen mittleren Durchmesser von 10 bis 200 Mikrometern haben.

9. Haftklebeband, umfassend eine Trägerunterlage mit einem Haftkleber gemäß Anpruch 1, der an mindestens einer Oberfläche davon anhaftet.

10. Haftklebemasse, umfassend.
(a) 50 bis 94 Gewichtsteile eines Acrylsäureesters eines nichttertiären nichtcyclischen Alkylalkohols, umfassend 4 bis 14 Kohlenstoffatome;
(b) 5 bis 45 Gewichtsteile eines Carbamoyloxyalkyl(meth)acrylats;
(c) gegebenenfalls 1 bis 15 Gewichtsteile eines stark polaren Monomers, copolymerisierbar mit den Monomeren der Elemente (a) und (b) und (d);
(d) gegebenenfalls 1 bis 35 Gewichtsteile eines mäßig polaren Monomers, copolymerisierbar mit den Monomeren der Elemente (a) und (b) und (c);
wobei (a) plus (b) plus (c) plus (d) insgesamt 100 Gewichtsteile umfassen; und wobei die Masse ein polares Monomer des Elements (c) oder des Elements (d) oder sowohl der Elemente (c) als auch (d) umfassen muß;
(e) 0,01 bis 1 Gewichtsprozent eines Photoinitiators, bezogen auf das Gesamtgewicht von (a) plus (b) plus (c) plus (d).

## Revendications

1. Adhésif sensible à la pression comprenant un copolymère polymérisé par le rayonnement ultraviolet comprenant :
(a) 50 à 94 parties en poids d'un ester d'acide acrylique d'un alcool alkylique non cyclique non tertiaire comprenant 4 à 14 atomes de carbone ;
(b) 5 à 45 parties en poids d'un (méth)acrylate de carbamyloxyalkyle ;
(c) éventuellement 1 à 15 parties en poids d'un monomère fortement polaire copolymérisable avec les monomères des éléments (a) et (b) et (d) ; et
(d) éventuellement 1 à 35 parties en poids d'un monomère modérément polaire copolymérisable avec les monomères des éléments (a) et (b) et (c) ;
où (a) plus (b) plus (c) plus (d) représentent un total de 100 parties en poids ; et où il faut que ledit copolymère comprenne du monomère polaire de l'élément (c), ou l'élément (d), ou les deux éléments (c) et (d).

2. Adhésif sensible à la pression selon la revendication 1 qui comprend 10 à 35 parties en poids dudit (méth)acrylate de carbamyloxyalkyle.

3. Adhésif sensible à la pression selon la revendication 1, où ledit (méth)acrylate de carbamyloxyalkyle est l'acrylate de N-butyl-2-carbamyloxyéthyle.

4. Adhésif sensible à la pression selon la revendication 1, où ledit monomère fortement polaire est choisi dans le groupe constitué de l'acide acrylique, l'acide itaconique, les acrylates d'hydroxyalkyle, les acrylamides, les acrylamides substitués, et leurs mélanges.

5. Adhésif sensible à la pression selon la revendication 1, où ledit monomère modérément polaire est choisi dans le groupe constitué de la N-vinylpyrrolidone, du N-vinylcaprolactame, de l'acrylonitrile, du N,N-diméthylacrylamide, et de leurs mélanges.

6. Adhésif sensible à la pression selon la revendication 1, qui comprend en outre un agent de réticulation, où ledit agent de réticulation est présent en une quantité de 0,01 à 1% en poids par rapport au poids total de (a) plus (b) plus (c) plus (d).

7. Adhésif sensible à la pression selon la revendication 1, où ledit monomère acrylate d'alkyle est choisi dans le groupe constitué des acrylate d'isooctyle, acrylate de 2-éthylhexyle, acrylate d'isononyle, acrylate de décyle, acrylate de dodécyle, acrylate de butyle, acrylate d'hexyle, et leurs mélanges.

8. Adhésif sensible à la pression selon la revendication 1, où ledit adhésif comprend en outre des microsphères, où lesdites microsphères représentent 5 à 65% en volume de l'adhésif, où lesdites microsphères ont un diamètre moyen de 10 à 200 micromètres.

9. Ruban adhésif sensible à la pression comprenant un support ayant l'adhésif sensible à la pression selon la revendication 1 qui adhère sur au moins une ses surfaces.

10. Composition d'adhésif sensible à la pression comprenant :
(a) 50 à 94 parties en poids d'un ester d'acide acrylique d'un alcool alkylique non cyclique non tertiaire comprenant 4 à 14 atomes de carbone ;
(b) 5 à 45 parties en poids d'un (méth)acrylate de carbamyloxyalkyle ;
(c) éventuellement 1 à 15 parties en poids d'un monomère fortement polaire copolymérisable avec les monomères des éléments (a) et (b) et (d) ; et
(d) éventuellement 1 à 35 parties en poids d'un monomère modérément polaire copolymérisable avec les monomères des éléments (a) et (b) et (c ) ;
où (a) plus (b) plus (c) plus (d) représentent un total de 100 parties en poids ; et où il faut que ladite composition comprenne du monomère polaire de l'élément (c), ou l'élément (d), ou les deux éléments (c) et (d) ;
(e) 0,01 à 1% en poids d'un photoinitiateur par rapport au poids total de (a) plus (b) plus (c) plus (d).
